# EUROPEAN PATENT APPLICATION

(11) **EP 3 156 672 A1**
(43) Date of publication of application: **19.04.2017**
(21) Application number: 16192046.7
(22) Date of filing: 03.10.2016
(51) Int. Cl.: F16B 45/02

(54) **IDENTIFICATION OF ITEMS**

(30) Priority: 16.10.2015 GB 201518301
(71) Applicant: DMM International Ltd, Llanberis Gwynedd LL55 4EL (GB)
(72) Inventor: Partridge, Robert, Llanberis, Gwynedd LL55 4EL (GB)
(74) Representative: Hamilton, Alistair

(57) **Abstract**

Items of personal protective equipment, such as carabiners 10, descenders, slings, harness components or belays for use in working at height or climbing are disclosed. The item of equipment includes a component 12 of metal, characterised in that there is formed within the component a well 30 that opens to a surface of the component, and which includes an RFID tag 32 that is contained within the well such that it does not project from the well beyond the surface of the component. The RFID tag is typically surrounded by electrically non-conductive, magnetically permeable resin 112 that serves to protect the tag and secure it within the well and a cap 34; 110 to close the well 30. Also disclosed is a maintenance management system according to claim 14 operable, on reading an RFID tag in an item to generate a display of data read from the RFID tag that corresponds to the data marked on the item or data looked up or otherwise derived from data read from the RFID tag that corresponds to human-readable data marked on the item.

## Description

This invention relates to identification of items. It has particular application to providing for unique identification of individual manufactured items.

There are many instances where it is desirable to be able to identify individual, substantially identical, manufactured items. This is particularly important for items that are safety-critical, that are subject to periodic inspection and which have to be tracked through their entire life cycle.

An example instance in which this invention might find application is In the "Working at Height" / Personal Protective Equipment (PPE) industry where there is a requirement to uniquely identify equipment in order to monitor the entire life cycle of a product from purchase through use, inspection and maintenance, and finally to redundancy. This is done in conjunction with safety management systems, which keep digital inspection records of every item identified by a unique serial number. PPE equipment has a limited lifespan and needs regular maintenance to ensure the safety of its user. The current solution for this data is a laser marked serial number on the product.

Where a large number of individual items are to be tracked, a significant amount of time and effort is required to read the serial number and transcribe it into management system software. Moreover, if the serial number becomes illegible, for example through abrasion during use, an otherwise serviceable component may have to be scrapped if its history and maintenance cannot be documented.

Within the PPE industry, radio-frequency identification (RFID) tagging has begun to be adopted as a means for uniquely identifying items, as is the case in a wide range of other asset management and stock control applications. However, conventional RFID tags have proven to have disadvantages when used in this context, particularly for metal hardware items such as carabiners. RFID technology has historically been problematic when used in close proximity to metal products, due to the disruption of the electro-magnetic fields used to power and read the tags. This has made applying RFID technology to some specific PPE products impossible without compromising the functionality of the equipment. Current RFID tags in PPE are large plastic components that encapsulate an RFID chip. On smaller equipment this is not an option due to the size of the tags and their encapsulation.

An aim of this invention is to provide a practical and cost-effective arrangement for RFID identification of equipment that is robust and that has minimal effect on the function or manufacturing processes of the equipment.

From a first aspect, this invention provides an item of equipment that includes a component of metal, in which there is formed within the component a well that opens to a surface of the component, and which includes an RFID tag that is contained within the well such that it does not project from the well beyond the surface of the component.

By recessing the RFID tag within a well in the component, it has negligible effect on the function of the equipment and is protected against damage while the equipment is in use.

Typically, the RFID tag is surrounded by resin that serves to protect the tag and secure it within the well. The resin and the tag may substantially fill the well. Alternatively or additionally, a cap may be applied to close the well. The resin and/or the cap may form a surface that is continuous with metal surrounding the well such that its presence does not affect the overall shape of the component. It may be coloured to visually match approximately or exactly the metal surrounding the well so as to reduce its visual impact. Alternatively, the resin and/or the cap may have a shape and/or appearance in contrast to that of the metal surrounding the well to make its presence apparent. Advantageously, the resin and/or the cap are sufficiently robust to prevent removal of the RFID tag without causing its destruction. The resin is most preferably an electrically non-conductive resin and is preferably loaded with a magnetically permeable material such as ferrite or particulate iron. This can improve communication between the RFID tag thereby increasing the distance between the reader and the tag at which a successful read of the tag can be carried out. As well as assisting operation of a reader to read the content of the tag, use of such a resin allows the tag to be recessed more deeply within the component so affording the tag greater protection and increasing its durability.

The region of the component in which the well is formed may be partially enclosed by another component. Alternatively, in normal use of the equipment, the well may be obscured by another component that can be moved to reveal the well. The other component may be a locking component which remains in a locked configuration during normal use of the component. For instance, if the component is a carabiner, the other component may be part of a mechanism to secure the gate of the carabiner.

The chip within the RFID tag may contain arbitrary data, but this will most typically be sufficient to identify each specific, individual component. For example, the RFID chip typically contains a serial number or identifier that is unique, or is unique within a predetermined context or in combination with other data stored on or external to the RFID chip. The component may be visibly marked with a human-readable indication of some or all data contained in the RFID chip. Alternatively or additionally, the data contained in the RFID chip may include a reference that enables such human-readable data to be looked up or otherwise determined.

The invention may be embodied in a wide range of equipment. Typical embodiments of the invention provide a piece of personal protective equipment, for example for use in working at height or in climbing. For example, it may be a connector such as a carabiner, a descender, a sling, a harness component or a belay.

From a second aspect, this invention provides a maintenance management system comprising an RFID reader capable of reading an RFID tag in an item of equipment according to the first aspect of the invention and a computer program operable to acquire and process data captured by the RFID reader from an RFID tag.

On reading an RFID tag in an item that is visibly marked with a human-readable indication of some or all data contained in the RFID tag, such a system may be operative to generate a display of data read from the RFID tag that corresponds to the data marked on the item. A user can then verify that the machine-read data corresponds to the visible data marked on the item.

An embodiment of the invention will now be described, by way of example, and with reference to the accompanying drawings, in which:
Figure 1 shows a carabiner being an embodiment of the invention;

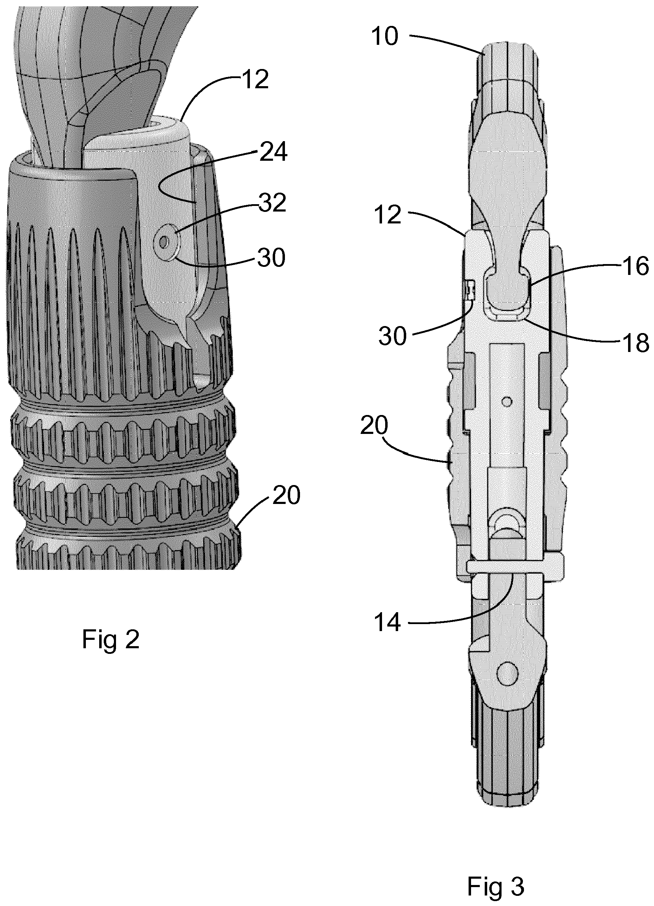

Figure 2 is a detail of the embodiment of Figure 1;
Figure 3 shows a cross-section of the embodiment of Figure 1;

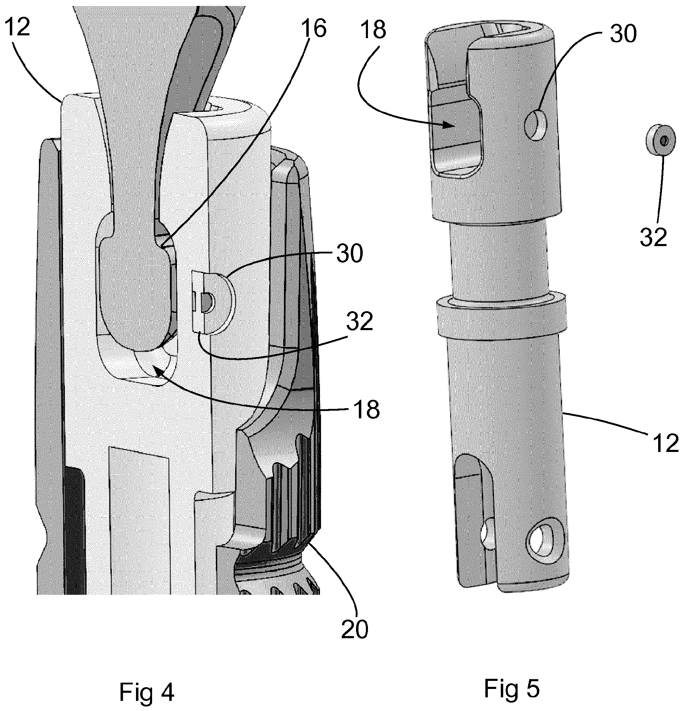

Figure 4 shows a cross-section in the region of the detail of Figure 2;
Figure 5 is an exploded view of components of the embodiment of Figure 1;
Figure 6 is a view similar to Figure 5 of an alternative arrangement of components of the embodiment of Figure 1;
Figure 7 shows a cross-section of a component of the embodiment of Figure 1 that contains an RFID tag and a RFID reader;
Figures 8 and 9 show a modification to the embodiment of Figure 1;
Figure 10 is a diagram of a preferred arrangement in an embodiment of the invention; and
Figure 11 is a cross-section of the arrangement of Figure 10 in contact with a reader.

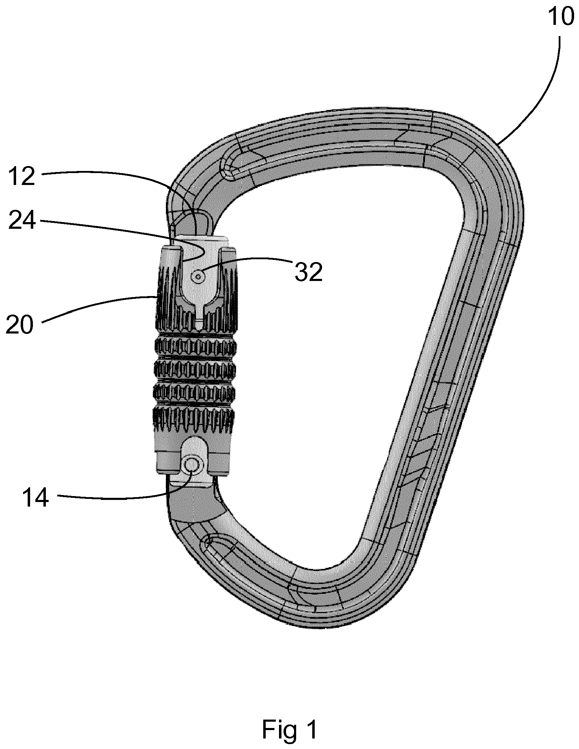

With reference to Figure 1, a carabiner embodying the invention is, to a greater extent, conventional, and will therefore be described only briefly. The carabiner comprises an approximately C-shaped body 10 that has two ends, between which an opening is defined. A gate 12 is carried on one end of the body 10, such that it can pivot about a pivot pin 14, in the plane of the body, between a closed position (shown in the figures), in which it closes the opening, and an open position in which an object can pass through the opening into the interior of the body 10. The gate 12 is spring biased so that it is urged towards the closed position. When in the closed position, an end portion 16 of the body 10 enters a recess 18 in an end portion of the gate 12 remote from the pivot pin 14.

A generally cylindrical locking barrel 20 is carried on the gate 12 whereby it can be rotated about the gate 12. The barrel 20 is biased to rotate away from a release position towards a locking position. The purpose of the locking barrel 20 is to prevent the gate 12 moving from the closed position without its being deliberately manipulated by a user. In this embodiment, the barrel 20 is formed with a slot 24 that extends axially from the end of the barrel 20 remote from the pivot 14. When the gate 12 is closed, and the barrel 20 is in the locking position, movement of the gate 12 is limited because a part of the barrel 20 makes contact with the end portion 16 of the body 10. To open the gate 12, the barrel 20 must first be rotated such that the slot 24 is aligned to allow the end portion 16 of the body to pass through the slot 24, thereby allowing the gate 12 to open. In preferred embodiments, a user must first displace the barrel 20 axially along the gate 12 before it is free to rotate: this is an enhancement to the security of the locking effect of the barrel 20.

As described thus far, the carabiner is conventional. The features particular to this embodiment will now be described.

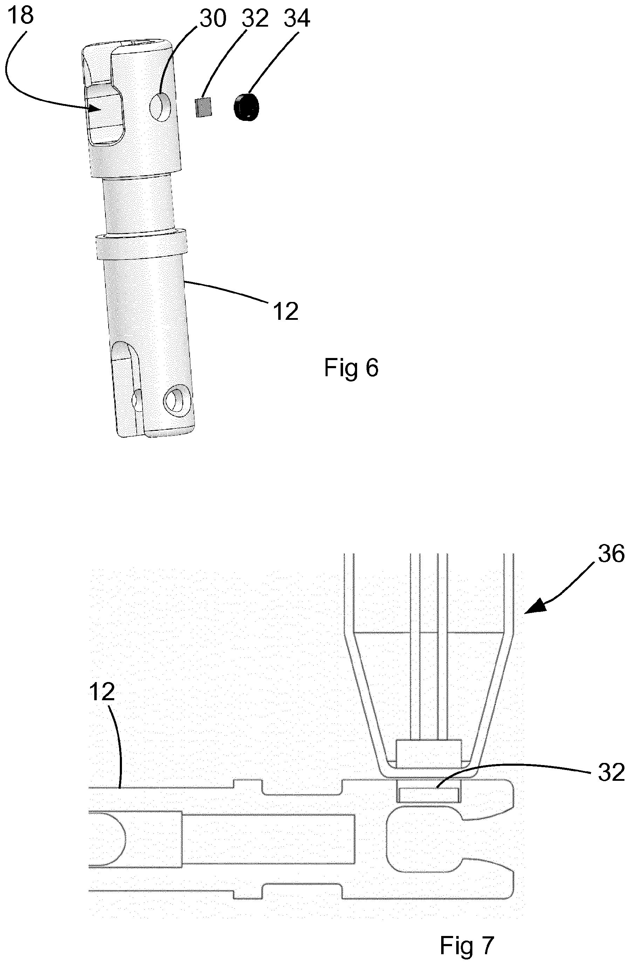

A cylindrical well 30 is extends radially into the gate 12 in the region of the recess 18. In this embodiment, the well 30 has an axis that is normal to the plane in which the end portion 16 of the body 10 enters the recess 18. An RFID tag 32, which includes an RFID chip and associated antenna, is placed within the well 30 where it is retained such that it is entirely recessed within the gate 12. That is, no part of the RFID tag 32 projects out of the well 30. The RFID tag 32 is secured within the well 30 and encapsulated with an electrically non-conductive, magnetically permeable resin that extends to the surface of the well to form a continuous, smooth surface with the metal surrounding it. Alternatively or additionally, as shown in Figure 6, the well 30 may be closed by a cap 34 that is secured in place with adhesive. The size of the well 30 is sufficiently small that it has no significant effect upon the strength of the gate, so its formation can be introduced into the manufacturing process of an existing component with a minimum of disruption.

When the gate 12 is closed and the barrel 20 released to return to the locking position, the well 30 is accessible through the slot 24. This allows an antenna of an RFID reader 36 to be placed into contact or close proximity with the resin and/or cap that closes the slot to enable the RFID tag 32 to be read.

It will be seen that the RFID tag 32 is doubly protected: first, it is recessed within the gate 12 so is protected by the metal surrounding the well 30. In addition, it is protected by the material of the barrel 20 adjacent to the slot 24. As such, it is unlikely to suffer damage from abrasion or impact during use. This avoids the need to contain the RFID tag 32 within a larger protective enclosure, as has been the case in conventional RFID tagging systems for PPE components.

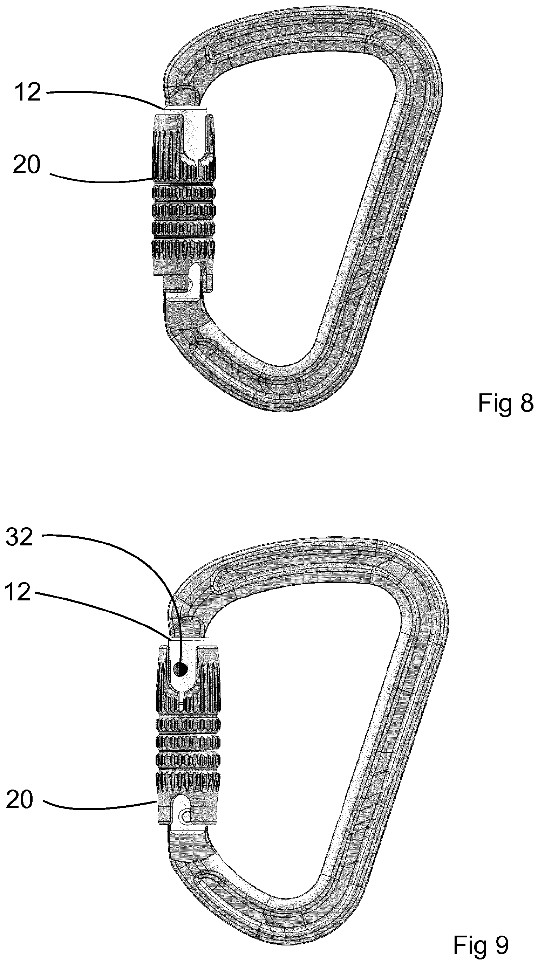

A modification to this embodiment, shown in Figures 8 and 9, can provide additional protection for the RFID tag 32. In the modification, the position of the well 30 is moved circumferentially around the gate 12 to a position in which it is partly or entirely covered by the metal of the barrel 20 when the barrel is in the locking position, as shown in Figure 8. This means that the RFID tag 32 is entirely covered when the carabiner is in normal use. In order to read the RFID tag, the barrel 20 must first be rotated a short distance from the locking position towards the release position, as shown in Figure 9, to expose the well 30 and the RFID tag contained within.

The data contained within the chip of the RFID tag 32 can be arbitrarily selected by a manufacturer. However, it will most typically include a serial number or similar unique identifier or an identifier that is unique when combined with some other data, such as a product identification code. Alternatively or additionally, it might contain a reference to an external database in which data relating to the article, including, for example, its serial number. It may also contain data that is not publicly disclosed (for example encrypted data) that enables a manufacturer to determine whether it is a genuine or counterfeit item. A corresponding serial number can be formed on the surface of the item for visual inspection by a user. This can be compared with data that is read from the RFID chip or retrieved from a database to ensure that there is no unexpected inconsistency that might indicate, for example, that the component has been tampered with.

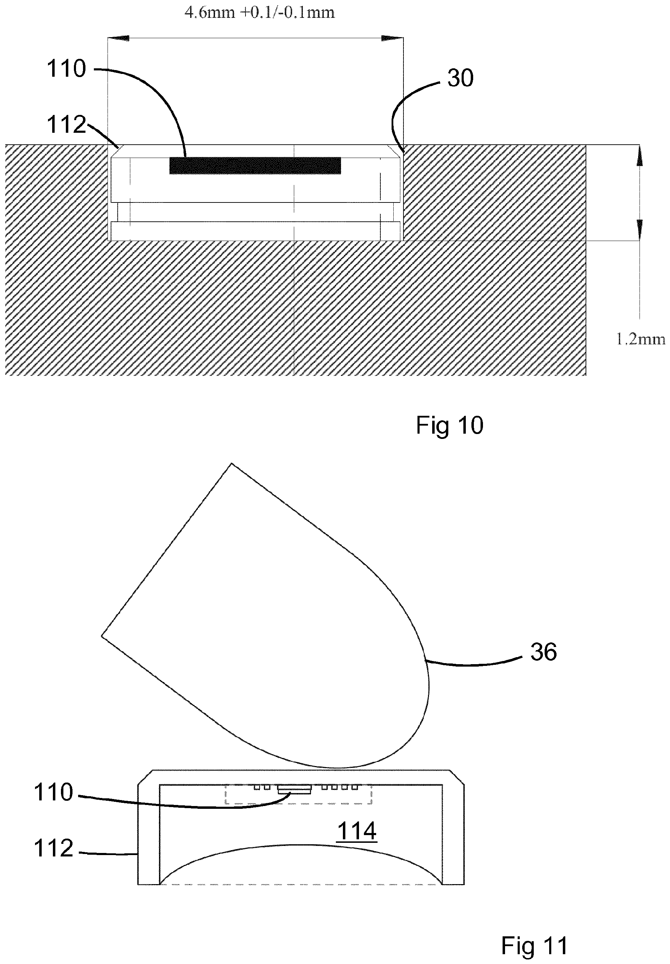

A preferred specific implementation, shown in Figures 10 and 11, with typical dimensions being indicated on Figure 10. In this arrangement, the chip 110 is supplied in a plastic cap 112, which is filled with resin 114. This is glued into position in the well 30 by films of adhesive, cut to the dimensions of the well 30 and placed into the well, thereby avoiding the difficulty of dispensing liquid adhesive. The cap 112 is then clamped in place in the well 30 and heat is applied until the adhesive has cured.

The resin used inside the plastic cap, is a magnetically permeable resin, to facilitate the readability of the chip by a reader 36 placed in contact with an outer surface of the cap.

## Claims

1. An item of personal protective equipment (10) for use in working at height or climbing that includes a component (12) of metal, **characterised in that** there is formed within the component a well (30) that opens to a surface of the component, and which includes an RFID tag (32) that is contained within the well such that it does not project from the well beyond the surface of the component.

2. An item of equipment according to claim 1 in which the RFID tag is surrounded by resin (112) that serves to protect the tag and secure it within the well and a cap (34; 110) to close the well (30).

3. An item of equipment according to claim 2 in which the resin and/or the cap form a surface that is continuous with metal surrounding the well.

4. An item of equipment according to claim 2 or claim 3 in which the resin and/or the cap is/are coloured to match the metal surrounding the well.

5. An item of equipment according to any one of claims 2 to 4 in which the resin and/or the cap have a shape and/or appearance in contrast to that of the metal surrounding the well.

6. An item of equipment according to any one of claims 2 to 5 in which the resin and/or the cap are sufficiently robust to prevent removal of the RFID tag without causing its destruction.

7. An item of equipment according to any one of claims 2 to 6 in which the resin is electrically non-conductive and includes magnetically permeable material.

8. An item of equipment according to claim 7 in which the magnetically permeable material is ferrite or particulate iron.

9. An item of equipment according to any preceding claim in which the region of the component (12) in which the well (30 is formed is partially enclosed by another component (20) whereby, in normal use of the equipment, the well is obscured by the other component which can be moved to reveal the well.

10. An item of equipment according to claim 9 in which the other component is a locking component which remains in a locked configuration during normal use of the component

11. An item of equipment according to any preceding claim in which the chip within the RFID tag (30) contains data sufficient to identify each specific, individual component, including a serial number that is unique within a predetermined context or in combination with other data stored on or external to the RFID chip.

12. An item of equipment according to any preceding claim that is visibly marked with a human-readable indication of data that can be accessed or otherwise determined using data on the RFID chip.

13. An item of personal protective equipment according any preceding claim that is one of a carabiner, a descender, a sling, a harness component or a belay.

14. A maintenance management system comprising an RFID reader (36) capable of reading an RFID tag in an item of equipment according any preceding claim and a computer program operable to acquire and process data captured by the RFID reader from an RFID tag.

15. A maintenance management system according to claim 14 operable, on reading an RFID tag in an item according to claim 12 or any claim dependent therefrom, to generate a display of data read from the RFID tag that corresponds to the data marked on the item or data looked up or otherwise derived from data read from the RFID tag that corresponds to the data marked on the item.
